# EUROPEAN PATENT APPLICATION

(11) **EP 2 385 694 A1**
(43) Date of publication of application: **09.11.2011**
(21) Application number: 10250868.6
(22) Date of filing: 04.05.2010
(51) Int. Cl.: H04N 5/232

(54) **Imaging apparatus and method of using a graphical user interface therof**

(71) Applicant: Ability Enterprise Co., Ltd., Tapei (TW)
(72) Inventor: Lu, Tsung-Yi, Tao-Yuan (TW)
(74) Representative: Carter, Stephen John

(57) **Abstract**

An imaging apparatus and a graphical user interface are disclosed. The imaging apparatus includes a housing with optics and a display panel. A function switch is disposed on the housing, and configured to switch between an operating mode and a setting mode. A pointing device with a two-stage switch is disposed on the housing. Specifically, in the setting mode, the pointing device is configured to trace among a number of settings on the display panel, and the two-stage switch is configured to be pressed to confirm the setting. In the operating mode, the two-stage switch is configured to be pressed to perform an operation according to the setting confirmed in the setting mode.

## Description

### 1. FIELD OF THE INVENTION

The present invention generally relates to an imaging apparatus, and more particularly to an imaging apparatus having a pointing device with a two-stage switch.

### 2. DESCRIPTION OF RELATED ART

As modern cameras are equipped with more functions, numerous buttons are mounted on the housing surface of the cameras and occupy a substantive portion of the housing surface, thereby leaving little space to be utilized for other purposes. Those buttons also make the miniaturization in the camera difficult or impossible. In order to reduce the number of the mounted buttons, a touch panel is used to display the function icons that may be selected by a finger touch. However, the touch panel is costlier, for example, than a mere liquid crystal display (LCD) panel.

For the reason that conventional cameras either have numerous buttons or demand a costly touch panel, a need has thus arisen to propose a novel camera that not only substantially reduces the number of buttons on the housing surface without sacrificing required functions, but also reduces the overall manufacturing cost.

### SUMMARY OF THE INVENTION

In view of the foregoing, it is an object of the embodiment of the present invention to provide an imaging apparatus and a method of using a graphical user interface of the imaging apparatus without using a touch panel, thereby substantially lowering manufacturing cost and providing easier and faster setting.

According to one embodiment, the imaging apparatus includes a housing with optics contained therein and a display panel disposed thereon. A function switch is disposed on the housing and is configured to switch between an operating mode and a setting mode. A pointing device with a two-stage switch is disposed on the housing. Specifically, in the setting mode, the pointing device is configured to trace among a number of settings whose associated setting icons are displayed on the display panel; and the two-stage switch is configured to be pressed to confirm the setting that is traced by the pointing device. In the operating mode, the two-stage switch is configured to be pressed to perform an operation according to the setting confirmed in the setting mode.

### BRIEF DESCRIPTION OF THE DRAWINGS

FIG. 1 shows a top view, a back view and a side view of an imaging apparatus according to one embodiment of the present invention;
FIG. 2 shows a schematic diagram of switching between the operating mode and the setting mode;
FIG. 3 schematically shows a two-stage pointing device including a pointing device and a two-stage switch;
FIG. 4A shows an example, in which four settings may be traced in sequence when the pointing device is rotated rightward or leftward;
FIG. 4B shows another example, in which four sub-settings may be traced in sequence when the pointing device is rotated forward or backward;
FIG. 4C shows a further example, in which the pointing device may directly trace settings and sub-settings across different levels; and
FIG. 5 shows a method of using a graphical user interface (GUI) of an imaging apparatus according to another embodiment of the present invention.

### DETAILED DESCRIPTION OF THE INVENTION

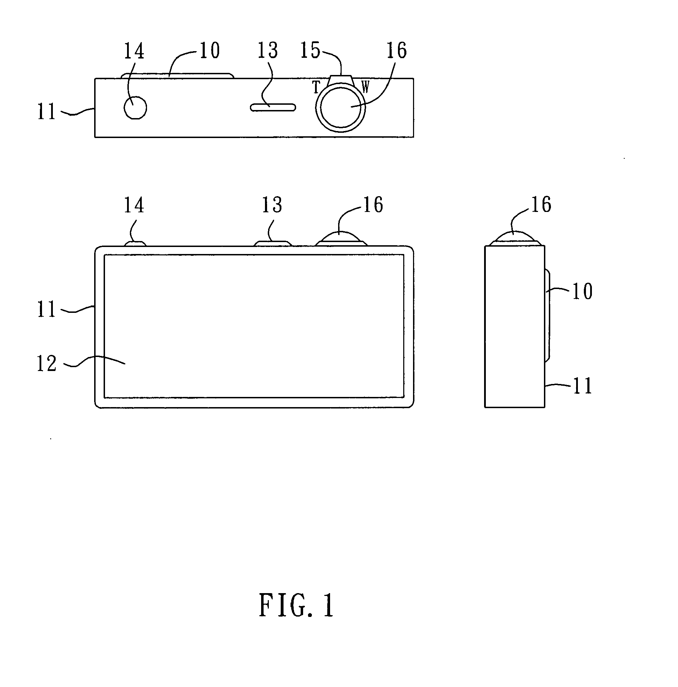

FIG. 1 shows a top view, a back view and a side view of an imaging apparatus according to one embodiment of the present invention. The imaging device may be, but not limited to, a digital still camera, a digital video recorder or a mobile phone with a camera.

In the embodiment, optics such as lens 10 is disposed in a housing 11, and a display panel 12 such as a liquid crystal display (LCD) is disposed on back of the imaging device. A power key 13 is disposed, for example, on the top side of the housing 11, and is used to turn power on or off. It is appreciated that other power on/off scheme may be used instead. For example, the imaging device may be powered on by opening a lens cover, and powered off by closing the lens cover.

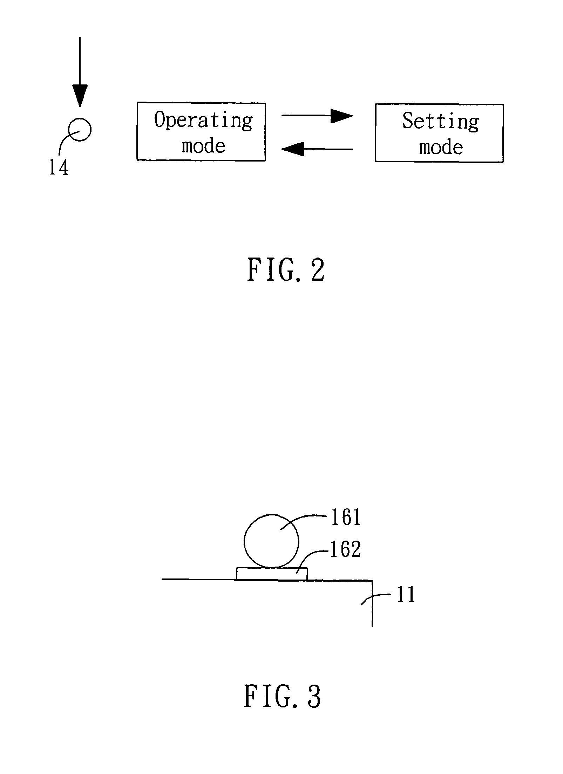

A function switch 14 is disposed on the housing 11, and is used to switch the imaging device between an operating mode and a setting mode. For example, it is shown in FIG. 2 a schematic diagram of switching between the operating mode and the setting mode whenever the function switch 14 (e.g., a button switch) is pressed. It is appreciated that the function switch 14 may be disposed on a place other than that shown.

A zoom lever 15 (or wide/tele (W/T) lever) is used to zoom an image displayed on the display panel 12 in the operating mode. For example, the image is zoomed in when sliding the zoom lever 15 to the T side, and the image is zoomed out when sliding the zoom lever 15 to the W side.

According to one aspect of the embodiment, a pointing device with a two-stage switch 16 (or abbreviated as two-stage pointing device) is disposed, for example, on the top side of the housing 11 and is adjacent to the zoom lever 15. As shown in FIG. 3, the two-stage pointing device 16 primarily includes a pointing device 161 such as a trackball, and a two-stage switch 162 such as a two-stage dome switch that is disposed between the pointing device 161 and the housing 11. The pointing device 161 is capable of being rotated, at least, rightward, leftward, forward and backward.

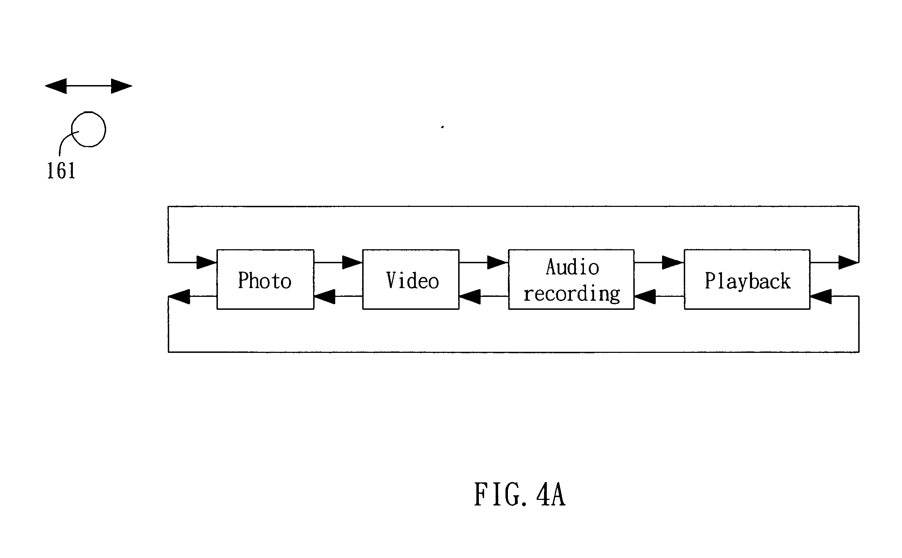

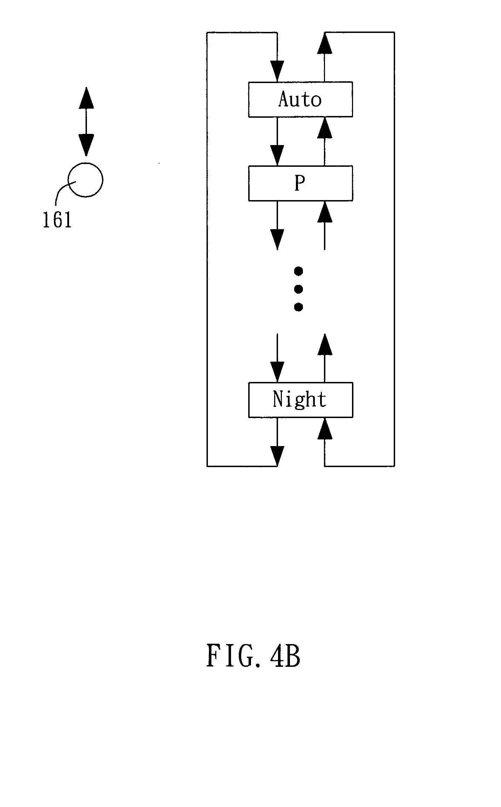

Specifically speaking, in the setting mode, the pointing device 161 may be rotated by a user in order to trace among a number of settings whose associated setting icons are displayed on the display panel 12. FIG. 4A shows an example, in which four settings may be traced in sequence when the pointing device 161 is rotated rightward or leftward. FIG. 4B shows another example, in which plural sub-settings may be traced in sequence when the pointing device 161 is rotated forward or backward.

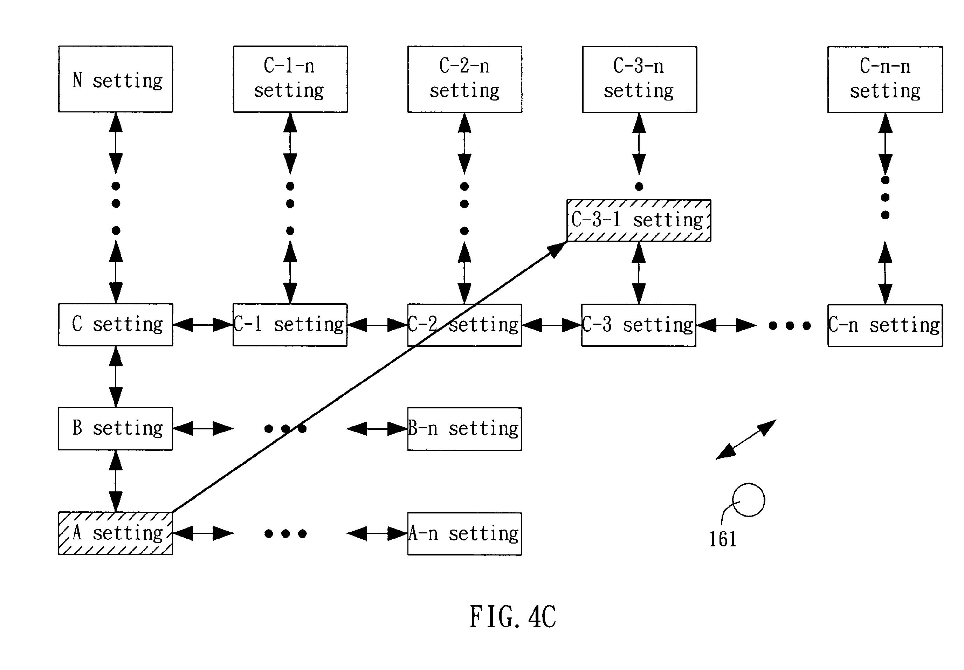

According to a specific embodiment, the pointing device 161 is capable of being rotated in a direction other than rightward, leftward, forward and backward described above. Accordingly, the pointing device 161 is rotatable to directly trace settings and sub-settings across different levels that are hierarchically organized into successive levels, such as that shown in FIG. 4C. Before finishing the setting, the two-stage switch 162 may be pressed by the user in order to confirm or decide the setting that has been traced by the pointing device 161. In one exemplary embodiment, the imaging device is automatically switched to the operating mode after finishing the setting.

On the other hand, in the operating mode, the two-stage switch 162 is configured to be pressed by the user to perform an operation according to the setting confirmed in the setting mode. The two-stage switch 162 may be maneuvered as a conventional shutter button. In other words, the two-stage switch 162 may be pressed and held halfway down to focus, and may be pressed fully down to shoot an image.

In a specific embodiment, the pointing device 161, rather than the zoom lever 15, may be configured to zoom an image displayed on the display panel 12 in the operating mode. For example, the pointing device 161 is rotated leftward (or to the T side) to zoom in the image, and the pointing device 162 is rotated rightward (or to the W side) to zoom out the image.

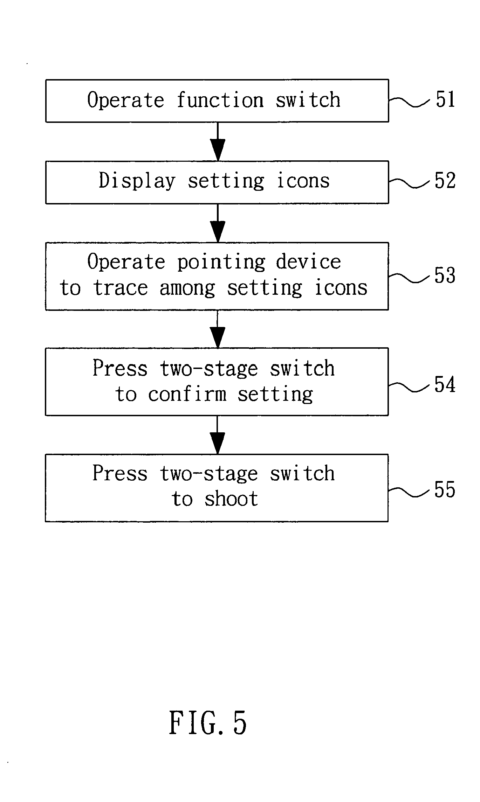

According to the embodiment disclosed above, the present invention provides a method of using a graphical user interface (GUI) of an imaging apparatus according to another embodiment as shown in FIG. 5. In step 51, after turning on the imaging apparatus, the function switch 14 may be operated (e.g., pressed) to switch between an operating mode and a setting mode. In the setting mode, a number of setting icons are displayed on the display panel 12 (step 52) to respectively represent a number of settings. Next, in step 53, the pointing device 161 may be operated to trace among the setting icons in the setting mode. Before finishing the setting, the two-stage switch 162 may be pressed (step 54) by the user in order to confirm or decide the setting that has been traced by the pointing device 161. Finally, the two-stage switch 162 may be pressed (step 55) in the operating mode to perform an operation (e.g., capturing an image) according to the setting confirmed in the setting mode.

According to the embodiments described above, numerous buttons of the conventional imaging device may be left out, and a costly touch panel becomes unneeded. Moreover, the GUI according to the embodiments may provide users with easier and faster settings.

Although specific embodiments have been illustrated and described, it will be appreciated by those skilled in the art that various modifications may be made without departing from the scope of the present invention, which is intended to be limited solely by the appended claims.

## Claims

1. An imaging apparatus, comprising:
a housing with optics contained therein and a display panel disposed thereon;
a function switch disposed on the housing, the function switch being configured to switch between an operating mode and a setting mode; and
a pointing device with a two-stage switch disposed on the housing;
wherein, in the setting mode, the pointing device is configured to trace among a plurality of settings whose associated setting icons are displayed on the display panel, and the two-stage switch is configured to be pressed to confirm the setting that is traced by the pointing device;
wherein, in the operating mode, the two-stage switch is configured to be pressed to perform an operation according to the setting confirmed in the setting mode.

2. The imaging apparatus of claim 1, wherein the two-stage switch is disposed between the pointing device and the housing.

3. The imaging apparatus of claim 1, wherein the pointing device is a trackball.

4. The imaging apparatus of claim 3, wherein the two-stage switch is a two-stage dome switch.

5. The imaging apparatus of claim 3, wherein the plurality of settings are hierarchically organized into successive levels, and the trackball is rotatable to directly trace settings across different levels.

6. The imaging apparatus of claim 1, wherein the function switch includes a button switch.

7. The imaging apparatus of claim 1, wherein the pointing device is configured to zoom an image displayed on the display panel in the operating mode.

8. The imaging apparatus of claim 1, further comprising a zoom lever adjacent the pointing device, the zoom lever being used to zoom an image displayed on the display panel in the operating mode.

9. The imaging apparatus of claim 1, wherein the imaging apparatus is a digital still camera.

10. The imaging apparatus of claim 1, wherein the imaging apparatus is a digital video recorder.

11. The imaging apparatus of claim 1, wherein the pointing device is capable of being rotated rightward, leftward, forward and backward.

12. The imaging apparatus of claim 11, wherein the pointing device is capable of being rotated in a direction other than rightward, leftward, forward and backward.

13. A method of using a graphical user interface of an imaging apparatus, the imaging apparatus including a display panel, a function switch and a pointing device with a two-stage switch, the method comprising:
operating the function switch to switch between an operating mode and a setting mode;
displaying a plurality of setting icons on the display panel in the setting mode, the plurality of setting icons respectively representing a plurality of settings;
operating the pointing device to trace among the plurality of setting icons in the setting mode;
pressing the two-stage switch in the setting mode to confirm the setting whose associated setting icon is traced by the pointing device; and
pressing the two-stage switch in the operating mode to perform an operation according to the setting confirmed in the setting mode.

14. The method of claim 13, wherein the pointing device is a trackball, which is operated by rotation.

15. The method of claim 14, wherein the step of operating the pointing device in the setting mode comprises:
rotating the trackball to directly trace setting icons across different levels, wherein the plurality of setting icons are hierarchically organized into successive levels.

16. The method of claim 13, before the step of pressing the two-stage switch in the operating mode, further comprising:
operating the pointing device to zoom an image displayed on the display panel in the operating mode.

17. The method of claim 13, wherein the imaging apparatus is a digital still camera.

18. The method of claim 13, wherein the imaging apparatus is a digital video recorder.

19. The method of claim 13, wherein the pointing device is capable of being rotated rightward, leftward, forward and backward.

20. The method of claim 19, wherein the pointing device is capable of being rotated in a direction other than rightward, leftward, forward and backward.
